Europäisches Patentamt

European Patent Office

Office européen des brevets

(11) Publication number: **0 202 296**
**B1**

# (12) EUROPEAN PATENT SPECIFICATION

(45) Date of publication of patent specification: **25.01.89**

(51) Int. Cl.⁴: **A 61 C 15/02**

(21) Application number: **85905921.4**

(22) Date of filing: **12.11.85**

(86) International application number:
**PCT/SE85/00451**

(87) International publication number:
**WO 86/02823 22.05.86 Gazette 86/11**

(54) **TOOTH PICK.**

(30) Priority: **13.11.84 SE 8405680**

(43) Date of publication of application:
**26.11.86 Bulletin 86/48**

(45) Publication of the grant of the patent:
**25.01.89 Bulletin 89/04**

(84) Designated Contracting States:
**AT BE CH DE FR GB IT LI LU NL SE**

(56) References cited:
**EP-A-0 105 654**
**SE-A-8 500 974**
**SE-B- 425 141**
**US-A-1 451 380**
**US-A-4 271 854**
**US-A-4 314 574**

(73) Proprietor: **STERN, Leif Einar**
**Fattershus**
**S-225 90 Lund (SE)**

(73) Proprietor: **DRENNOW, Sten Gunnar**
**Henninge 2372**
**S-243 00 Höör (SE)**

(72) Inventor: **STERN, Leif Einar**
**Fattershus**
**S-225 90 Lund (SE)**
Inventor: **DRENNOW, Sten Gunnar**
**Henninge 2372**
**S-243 00 Höör (SE)**

(74) Representative: **Rottmann, Maximilian R.**
**c/o Rottmann + Quehl AG Glattalstrasse 37**
**CH-8052 Zürich (CH)**

Courier Press, Leamington Spa, England.

## Description

The present invention relates to a tooth pick having an arcuate blade for insertion into an interdental space, whereby said blade is elastic and has a triangular cross section and whereby the base of the triangle forms one side of the blade while the tip of the triangle forms an opposite side of the blade.

Tooth picks of the abovementioned type are already known from e.g. US-A-4 271 854.

The blade at such tooth picks is bent and has a triangular cross section, wherein the base of the triangle forms the lower side of the blade and the tip of the triangle forms the upper side of the blade or vice versa. This design should permit the tooth pick to be inserted into interdental spaces with the blade standing upright, i.e. with the lower side formed by the base of the triangle directed downwards or upwards towards the papilla.

While the blade is inserted into the interdental space standing upright, certain limitations occur regarding the ability of the blade to withstand the forces required for insertion thereof into narrow interdental spaces. Thus, there is a great risk that the blade portion outside the interdental space yield when the blade is heavily loaded in a direction along a row of teeth for further insertion of the blade portions in the interdental space.

While the blade is inserted into the interdental space standing upright as defined, it further shows the ability to adapt itself to the corresponding triangular interdental space with small possibilities to thereafter turn the blade in any appreciable degree. This means that it can be difficult to get the blade to reach into all parts of the interdental space for cleaning thereof.

The object of the present invention is to provide an improved tooth pick of the abovementioned type regarding durability and cleaning properties. This is arrived at substantially by means of the features defined in the subsequent claim 1.

The characterizing features of the new tooth pick enables the blade to find the interdental space into which it shall be inserted while the blade is in a horizontal position, whereby the thickest blade portions are found at that side of the blade facing away from the row of teeth, where they are most useful for stiffening the blade when starting to press said blade into an interdental space. Furthermore, the blade is permitted to automatically turn from horizontal position to upright position when said place is pressed further into the interdental space, because the blade is forced thereto for adaption thereof to the triangular shape of the interdental space. Either you allow the handle portion of the tooth pick to follow this turning or allow the blade to turn relative to the handle portion, the blade will perform a substantially 90° turning in the interdental space when inserted further thereinto and this large turning movement provides a very good cleaning effect.

The invention will be further described below with reference to the accompanying drawings, in which

- fig. 1 is a top plan view of the tooth pick according to the invention during insertion into the interdental space between two molar teeth;

fig. 2-6 are five sections II-II to VI-VI of the tooth pick of fig. 1;

fig. 7 illustrates different positions of the tooth pick of fig. 1 in the interdental space;

fig. 8 illustrates a portion of the tooth pick of fig. 1 when turned into upright position in the interdental space; and

fig. 9 illustrates with dashed and dotted lines the front portion of the tooth pick lying horizontally in the interdental space and with solid lines and in section a portion connecting to said front portion after turning of the tooth pick to upright position in the interdental space.

The tooth pick illustrated in the drawings is elastic and made of e.g. a polyamide material eventually including a glass fibre material, whereby the glass fibre component preferably comprises 20-30 % by weight and provides sufficient strength to the tooth pick and a surface with certain grinding properties. The tooth pick consists of a handle portion 1 and a blade 2 extending therefrom, whereby said blade has a front portion 3 which is bent in the plane of the blade and tapering in the forward direction. The blade 2 has a triangular cross section, whereby the tip of the triangle forms the inner side 4 of the arc of the blade of the tooth pick facing the oral cavity 5 when the tooth pick is inserted into an interdental space 6 between two molar teeth 8, 9. The base of the triangle forms the outer side 10 of the blade arc of the tooth pick facing away from the oral cavity 5 when the tooth pick is inserted into the interdental space 6. The forward parts 11 of the front portion 3 preferably also have a triangular shape and eventually planar or almost planar cross section. The height of the triangular cross section of the blade 2 preferably tapers successively towards the point 12 of the front portion 3 of the blade and the blade has an arcuate front portion 3 which in backwards direction transforms into more straight portions. The outer side 10 of the blade 2, formed by the base of the triangle, may have tapering width towards the front portion 3.

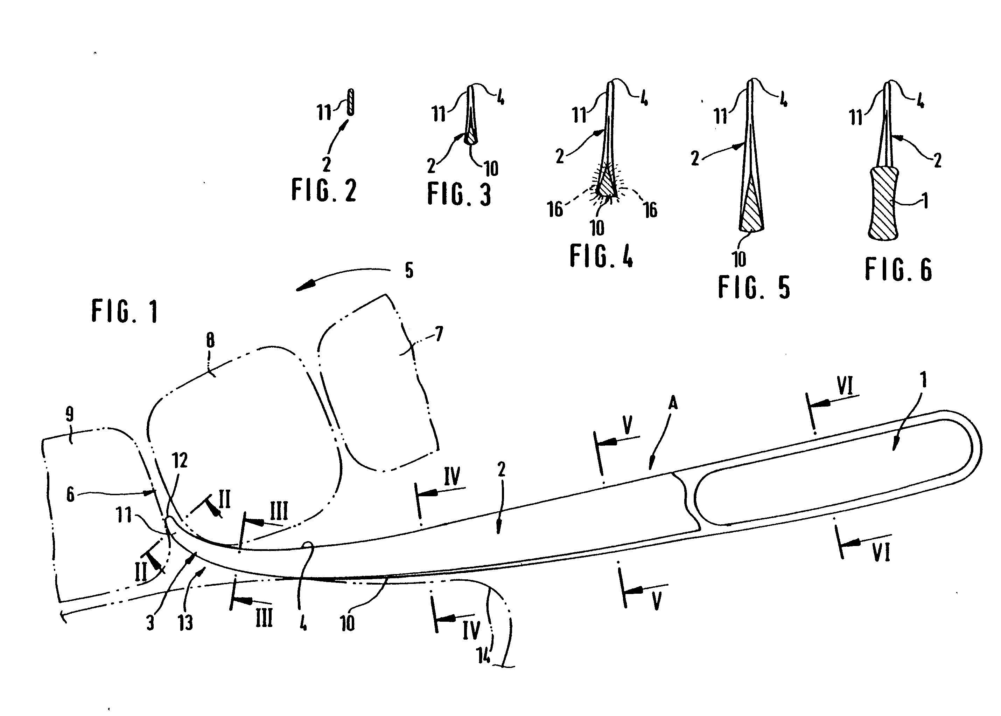

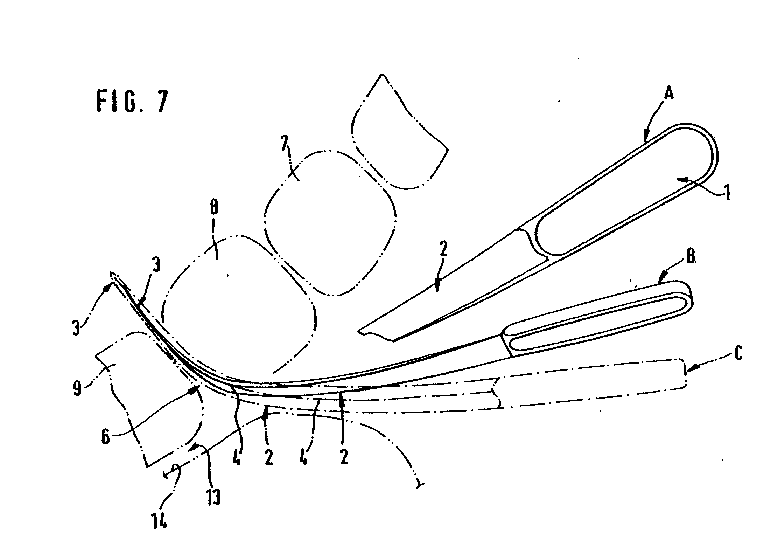

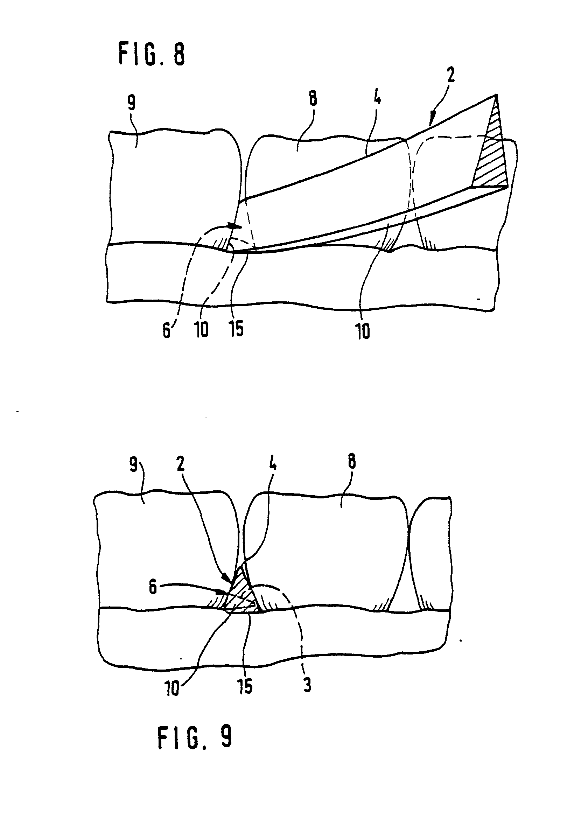

The front portion of the blade 2 has such an arcuate shape (see fig. 1) that it reaches into the interdental space 6 between the molar teeth 8, 9 when the tooth pick with the blade in horizontal position and the outer side 10 facing away from the row of teeth 7, 8 is moved along the space 13 between the cheek 14 and the molar teeth 7, 8 and 9 (fig. 1 and 7, position A). Additionally, the blade 2 has such a width that it in horizontal position (indicated with dashed and dotted lines in fig. 9) may be moved into substantial parts of the interdental space 6 and be turned or turn itself from horizontal inserting positions to upright positions. In fig. 7, the tooth pick is illustrated with solid lines in a position B wherein the blade 2 has been moved through the entire interdental space 6 and been turned or turned itself somewhat upwards towards an upright position. In the same figure, the tooth pick is shown with dashed and dotted lines in a position C wherein the blade 2 has been moved further inwards and been turned or turned itself to upright position. Hereby, such a part of the blade 2 reaches into the interdental space 6 which has an outer side, the width of which substantially corresponds with the width of the lower parts of the interdental space at the papilla 15 and thus the blade 2 fills those parts of the interdental space which are most difficult to get at. This position of the blade 2 is illustrated in more detail in fig. 8 and with solid lines and in section in fig. 9.

The shape of the tooth pick permits easy access also to rear interdental spaces 6 and by moving the blade 2 in and out of the interdental space 6 after insertion thereof into said space and/or by turning the blade between more or less horizontal and upright positions, the interdental space 6, the papilla 15 and the tooth surfaces facing said space may be rapidly and efficiently cleaned. The cleaning effect of the tooth pick is especially advantageous while the blade 2 itself may be turned relative to the handle portion and this turning may be more or less imposed upon the blade depending on how far the blade is inserted into the interdental space and to what extent the handle portion 1 is prevented from following this turning.

The drawings illustrate an enlargement of the tooth pick, which actually has a length of 40-60 mm. Thus, the tooth pick may be e.g. 50 mm, whereby the blade 2 has a length of 32 mm and the handle portion the remaining 18 mm of the total length. The bent front portion 3 of the blade 2 has a thickness of suitably 0,4 - 0,8 mm (preferably 0,6 mm) and the blade portions closest to said front portion are suitably 0,8 - 1,2 mm (preferably 1,0 mm). The front portion 3 of the blade 2 is suitably 0,8 - 2,5 mm wide and the blade portions closest to said front portion are preferably 2,5 - 4,0 mm. Closest to the handle portion 1, the blade 2 may have a width of about 4 mm or more and the handle portion is preferably somewhat wider, e.g. 6-7 mm.

The blade 2 or at least portions thereof may in certain cases be provided with bristles 16 (schematically illustrated in fig. 4 with dashed and dotted lines) of polyamide material on all three sides (the outer side 10 and two sides extending therefrom). The bristles 16 are preferably uniformly distributed and attached to the blade 2 by providing the surface of the blade with a watersoluble organic acid for dissolving the surface, whereafter the bristles 16 (preferably of the same polyamide material as the blade surface) are attracted to the blade 2 by electrostatic attraction, whereby those end portions of each bristle which contact the dissolved surface of the blade, are dissolved and brought to combine therewith for providing a blade wherein the blade and all bristles are integrated into one unit. The bristles 16 are attracted by static attraction in such a way that they orientate standing substantially straight out from the blade 2 and at substantially the same distance from each other. Eventually, the bristles may be provided on one or two of the three blade surfaces.

The shape of the tooth pick of the invention is not limited to the embodiment described above and illustrated in the drawings, but may vary within the scope of the following claims without loosing its excellent seeking and cleaning functions. Thus, the blade 2 may have a substantially triangular cross section, whereby the base and sides of the triangle must not be completely planar (as e.g. in figs. 8 and 9), but the base and/or the sides may eventually be broken or somewhat arcuate. The blade 2 must not necessarily have a triangular cross section along its entire length, even if it is preferable since the interdental space 6 is more or less triangular. The blade sides or surfaces may be somewhat bent and it is neither absolutely necessary that the width as well as the thickness of the blade 2 increases nor that the blade stiffness increases from the point and backwards. Neither must the tooth pick and/or blade 2 entirely be made of polyamide material, but only portions thereof must consist of or include such material. These examples are intended to show that the blade 2 may have different shape, provided that the front portion is arcuate as defined and that the blade 2 may be inserted into interdental spaces 6 in horizontal positions and be turned or turn itself to upright positions.

The tooth pick according to the invention may of course be made of another material than mentioned above while maintaining the required elasticity and it may naturally be used for cleaning interdental spaces between other teeth than molar teeth.

**Claims**

1. Tooth pick having an arcuate blade (2) for insertion into interdental spaces (6), whereby said blade is elastic and has a triangular cross section and whereby the base of the triangle forms one side of the blade while the tip of the triangle forms an opposite side of the blade, characterized in that the outer side (10) of the arc of the blade consists of the side of the blade formed by the base of the triangle while the inner side (4) of the blade arc, opposite to said outer side, consists of the side of the blade formed by the tip of the triangle, whereby the blade (2) for insertion into the interdental space (6) is positionable lying along a row of teeth (7, 8) with the outer side formed by the base of the triangle facing away from said row of teeth.

2. Tooth pick according to claim 1, characterized in that the blade (2) comprises a substantially more arcuate front portion (3) than the other portions of the blade.

3. Tooth pick according to claim 1 or 2, characterized in that the height of the triangular cross section of the blade (2) decreases successively towards a point (12) of a front portion (3) of the blade.

4. Tooth pick according to any preceding claim, characterized in that the blade (2) comprises a front portion (3) which at the front has a substantially planar cross section which in backwards direction transforms into the triangular cross section.

5. Tooth pick according to any preceding claim, characterized in that the outer side (10) of the blade (2), formed by the base of the triangle, has decreasing width towards a blade front portion (3).

6. Tooth pick according to any preceding claim, characterized in that the bent front portion (3) of the blade (2) has a thickness of 0,3 - 0,8 mm and that the blade portions closest to said front portion has a thickness of 0,8 - 1,2 mm.

7. Tooth pick according to any preceding claim, characterized in that the bent front portion (3) of the blade (2) has a width of 0,8 - 2,5 mm and that the blade portions closest to said front portion has a width of 2,5 - 4,0 mm.

8. Tooth pick according to any preceding claim, characterized in that at least the blade (2) is made of a polyamide material.

9. Tooth pick according to claim 8, characterized in that it is entirely made of polyamide material.

10. Tooth pick according to any preceding claim, characterized in that the blade (2) is made of polyamide material and that at least portions of said blade are provided with outwardly directed bristles (16) of polyamide material on the outer side (10) formed by the base of the triangle and/or one or two sides extending from said outer side to the inner side (4), whereby said bristles are uniformly distributed and attached to the blade while the surface of said blade has been provided with a watersoluble acid for dissolving said surface, whereafter the bristles have been attracted to the blade by means of electrostatic attraction, whereby those end portions of each bristle which contact the dissolved surface of the blade are brought to combine therewith for providing a blade wherein the blade and all bristles are integrated into one unit.

## Patentansprüche

1. Zahnstocher mit einem gebogenen Blatt (2) zum Einführen in Zahnzwischenräume (6), wobei dieses Blatt elastisch ist und einen dreieckigen Querschnitt hat, und wobei die Grundlinie des Dreiecks die eine Seite und die Spitze des Dreiecks die gegenüberliegende Seite des Blattes bildet, dadurch gekennzeichnet, dass die Aussenseite (10) des Blattbogens die durch die Grundlinie des Dreiecks gebildete Blattseite ist, während die dieser Aussenseite gegenüberliegende Innenseite (4) des Blattbogens die durch die Spitze des Dreiecks gebildete Blattseite ist, wobei das Blatt (2) zum Einführen in den Zahnzwischenraum (6) in eine Stellung bringbar ist, in der dasselbe längs einer Zahnreihe (7, 8) liegt und in der die durch die Grundlinie des Dreiecks gebildete Aussenseite von dieser Zahnreihe abgewandt ist.

2. Zahnstocher nach Anspruch 1, dadurch gekennzeichnet, dass das Blatt (2) einen Vorderteil (3) aufweist, der wesentlich stärker gebogen ist als die anderen Teile des Blattes.

3. Zahnstocher nach Anspruch 1 oder 2, dadurch gekennzeichnet, dass die Höhe des dreieckigen Querschnittes des Blattes (2) gegen die Spitze (12) eines Vorderteils (3) des Blattes hin allmählich abnimmt.

4. Zahnstocher nach einem der vorangehenden Ansprüche, dadurch gekennzeichnet, dass das Blatt (2) einen Vorderteil (3) aufweist, der an der Vorderseite einen im wesentlichen platten Querschnitt hat, welcher gegen die Rückseite zu in den dreieckigen Querschnitt übergeht.

5. Zahnstocher nach einem der vorangehenden Ansprüche, dadurch gekennzeichnet, dass die durch die Grundlinie des Dreiecks gebildete Aussenseite (10) des Blattes (2) eine gegen den Blattvorderteil (3) hin abnehmende Breite hat.

6. Zahnstocher nach einem der vorangehenden Ansprüche, dadurch gekennzeichnet, dass der gebogene Vorderteil (3) des Blattes (2) eine Dicke von 0,3 bis 0,8 mm hat und dass die an diesen Vorderteil unmittelbar anschliessenden Blatteile eine Dicke von 0,8 bis 1,2 mm haben.

7. Zahnstocher nach einem der vorangehenden Ansprüche, dadurch gekennzeichnet, dass der gebogene Vorderteil (3) des Blattes (2) eine Breite von 0,8 bis 2,5 mm hat und dass die an diesen Vorderteil unmittelbar anschliessenden Blatteile eine Breite von 2,5 bis 4,0 mm haben.

8. Zahnstocher nach einem der vorangehenden Ansprüche, dadurch gekennzeichnet, dass wenigstens das Blatt (2) aus Polyamid-Material hergestellt ist.

9. Zahnstocher nach Anspruch 8, dadurch gekennzeichnet, dass derselbe gänzlich aus Polyamid-Material hergestellt ist.

10. Zahnstocher nach einem der vorangehenden Ansprüche, dadurch gekennzeichnet, dass das Blatt (2) aus Polyamid-Material hergestellt ist und dass wenigstens Teile dieses Blattes an der durch die Grundlinie des Dreiecks gebildeten Aussenseite (10) und/oder an einer oder zwei der sich von dieser Aussenseite zur Innnenseite (4) erstreckenden Seiten mit Borsten (16) aus Polyamid-Material versehen sind, wobei diese Borsten gleichmässig verteilt und am Blatt befestigt sind, indem die Oberfläche dieses Blattes mit einer wasserlöslichen Säure zum Auflösen dieser Oberfläche behandelt worden sind und danach die Borsten durch elektrostatische Anziehung vom Blatt angezogen wurden, wodurch jene Endteile jeder Borste, welche mit der aufgelösten Blattoberfläche in Kontakt kommen, sich mit derselben verbinden, so dass ein Blatt entsteht, bei dem das Blatt und alle Borsten zu einer Einheit miteinander verbunden sind.

## Revendications

1. Cure-dent comprenant une lame courbe (2) pour insertion dans des espaces interdentaires (6), dans lequel ladite lame est élastique et a une section transversale triangulaire, et dans lequel la base du triangle forme un côté de la lame tandis que le sommet du triangle forme un côté opposé de la lame, caractérisé en ce que le côté extérieur (10) de l'arc de la lame est formé par le côté de la lame défini par la base du triangle, tandis que le côté intérieur (4) de l'arc de la lame opposé audit côté extérieur est formé par le côté de la lame défini par le sommet du triangle, de sorte que la lame (2), pour son insertion dans l'espace inter-dentaire (6), peut être placée le long d'une rangée de dents (7, 8), le côté extérieur défini par la base du triangle étant tourné à l'opposé de ladite rangée de dents.

2. Cure-dent suivant la revendication 1, caractérisé en ce que la lame (2) comprend une partie avant (3) sensiblement plus courbe que les autres parties de la lame.

3. Cure-dent suivant la revendication 1 ou 2, caractérisé en ce que la hauteur de la section triangulaire de la lame (2) diminue progressivement vers une pointe (12) d'une partie avant (3) de la lame.

4. Cure-dent suivant l'une quelconque des revendications précédentes, caractérisé en ce que la lame (2) comprend une partie avant (3) qui possède, à l'avant, une section transversale sensiblement plane qui se transforme vers l'arrière selon ladite section triangulaire.

5. Cure-dent suivant l'une quelconque des revendications précédentes, caractérisé en ce que le côté extérieur (10) de la lame (2), défini par la base du triangle, a une largeur qui diminue vers une partie avant (3) de la lame.

6. Cure-dent suivant l'une quelconque des revendications précédentes, caractérisé en ce que la partie avant courbe (3) de la lame (2) a une épaisseur de 0,3 à 0,8 mm et en ce que les parties de la lame les plus proches de ladite partie avant ont une épaisseur de 0,8 à 1,2 mm.

7. Cure-dent suivant l'une quelconque des revendications précédentes, caractérisé en ce que la partie avant courbe (3) de la lame (2) a une largeur de 0,8 à 2,5 mm et en ce que les parties de la lame les plus proches de ladite partie avant ont une largeur de 2,5 à 4,0 mm.

8. Cure-dent suivant l'une quelconque des revendications précédentes, caractérisé en ce qu'au moins la lame (2) est fabriquée en une matière de type polyamide.

9. Cure-dent suivant la revendication 8, caractérisé en ce qu'il est entièrement fait d'une matière polyamide.

10. Cure-dent suivant l'une quelconque des revendications précédentes, caractérisé en ce que la lame (2) est faite d'une matière polyamide et en ce qu'au moins des parties de la lame sont pourvues de poils (16) dirigés vers l'extérieur, en polyamide, sur le côté extérieur (10) défini par la base du triangle et/ou sur un ou deux côtés partant dudit côté extérieur vers le côté intérieur (4), de sorte que lesdits poils sont uniformément répartis et fixés à la lame pendant qu'un acide soluble dans l'eau a été appliqué à la surface de ladite lame pour dissoudre cette surface, après quoi les poils sont attirés vers la lame par attraction électrostatique, de sorte que les parties d'extrémité de chaque poil qui viennent en contact avec la surface dissoute de la lame se combinent avec celle-ci pour constituer une lame dans laquelle la lame et tous les poils sont intégrés en un ensemble.

FIG. 2

FIG. 3

FIG. 4

FIG. 5

FIG. 6

FIG. 1

EP 0 202 296 B1

FIG. 7

FIG. 8

FIG. 9